# EUROPEAN PATENT APPLICATION

(11) **EP 3 623 677 A1**
(43) Date of publication of application: **18.03.2020**
(21) Application number: 17909645.8
(22) Date of filing: 09.05.2017
(51) Int. Cl.: F16L 11/12, B29C 61/06

(54) **HEAT SHRINKABLE TUBE**

(71) Applicant: Asahi Intecc Co., Ltd., Seto-shi, Aichi 489-0071 (JP)
(72) Inventor: YAGI, Masaru, Aichi 489-0071 (JP)
(74) Representative: Winter, Brandl, Fürniss, Hübner, Röss, Kaiser, Polte - Partnerschaft mbB
(86) International application number: PCT/JP2017/017524
(87) International publication number: WO 2018/207252

(57) **Abstract**

[Problem] Provided is a heat shrinkable tube capable of improving adhesive strength not only in the cross-sectionally circumferential direction of tubular resin bodies but also in the longitudinal direction of the tubular resin bodies when an outer tubular resin body is layered and joined on the outer periphery of an inner tubular resin body.

[Solution] A heat shrinkable tube 1 has a hollow tubular shape with an inner periphery, and includes longitudinal protruded portions 3a, 3b, 3c, 3d, 3e, 3f, 3g, 3h, 3j, 3k, 3m, 3n, 3p, 3q, 3r, 3s, 3t, 3u, 3v, and 3w and inclined protruded portions 5, 7, and 9 extending in directions intersecting with the longitudinal direction of the heat shrinkable tube 1.

## Description

### TECHNICAL FIELD

The present invention relates to a heat shrinkable tube.

### BACKGROUND ART

Conventionally, tubes shrinkable radially upon heating are commonly used as covering materials or reinforcers for joining portions and end portions of electric wires, cables, and the like, and also finds their use in the field of medical devices. By way of example, when used in manufacturing a medical catheter, a catheter tube is inserted into the inside of a hollow and tubular heat shrinkable tube, and heat is then applied to contract the heat shrinkable tube to deform the outer shape of the catheter tube by taking advantage of a contractive force of the heat shrinkable tube.

Meanwhile, when a catheter tube used for a medical catheter is configured such that a plurality of tubular resin bodies of different types are layered in radial directions, the joining strength between the tubular resin bodies is a very important factor for determining the performance of the medical catheter.

For example, an uneven joining surface between an inner tubular resin body and an outer tubular resin body can be effective for enhancing the joining strength between tubular resin bodies layered in radial directions. A method of forming an uneven portion on the outer peripheral surface of the inner tubular resin body may use a force exerted when the aforementioned heat shrinkable tube contracts radially.

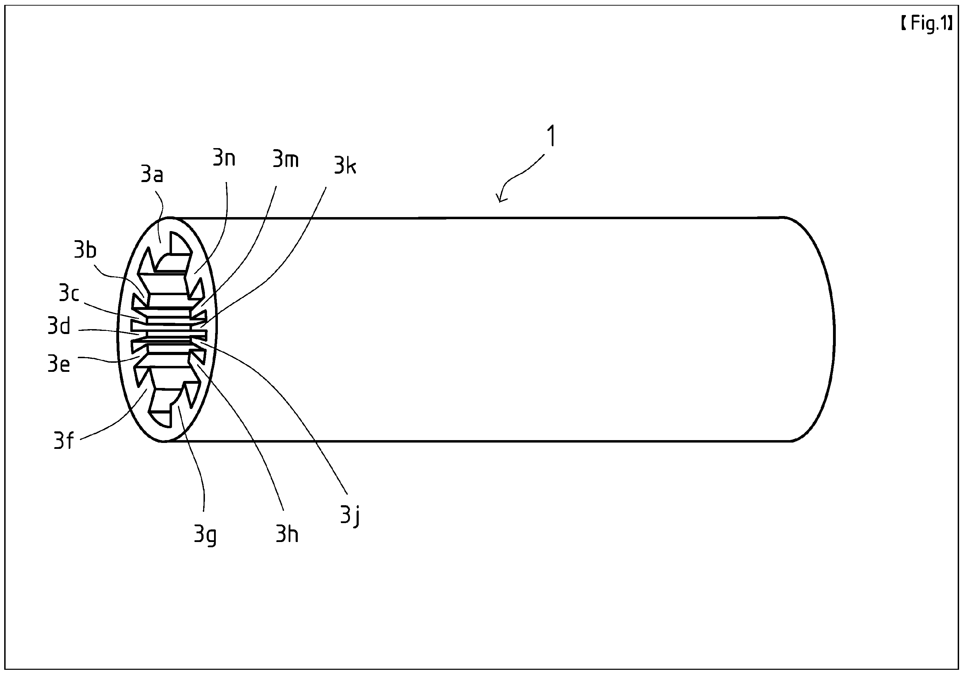

For example, Patent Document 1 describes a heat shrinkable tube 10 having an overall hollow tubular shape and including protruding portions 11 formed on the inner periphery of the hollow tubular shape, the protruding portions 11 extending in the longitudinal direction (see Fig. 1 and others).

However, in the heat shrinkable tube described in Patent Document 1 in which the protruded portions 11 extend only in the longitudinal direction, only depressed portions extending in the longitudinal direction are formed on the outer periphery of the inner tubular resin formed by the above heat shrinkable tube. This can lead to high adhesive strength in the cross-sectionally circumferential direction of tubular resin bodies, but may result in poor adhesive strength in the longitudinal direction of the tubular resin bodies when an outer tubular resin body is layered and joined on the outer periphery of an inner tubular resin body.

### CITATION LIST

### Patent Document

Patent Document 1: Japanese Patent Application Laid-Open No 2005-1339

### DISCLOSURE OF THE INVENTION

### Problems to be Solved by the Invention

The present invention is made in order to solve the aforementioned problem. An object of the present invention is to provide a heat shrinkable tube capable of improving adhesive strength not only in the cross-sectionally circumferential direction of tubular resin bodies but also in the longitudinal direction of the tubular resin bodies when an outer tubular resin body is layered and joined on the outer periphery of an inner tubular resin body.

### Means for Solving the Problems

In order to achieve the above object, provided is a heat shrinkable tube according to a first aspect of the present invention, having a hollow tubular shape with an inner periphery. The heat shrinkable tube includes protruded portions extending in at least two directions intersecting with each other provided on the inner periphery.

Further, in a second aspect of the present invention, the two directions in the first aspect of the present invention may be a longitudinal direction of the hollow tubular shape and a circumferential direction straight to the longitudinal direction.

Moreover, in a third aspect of the present invention, a heat shrinkable tube having a hollow tubular shape with an inner periphery includes spirally-extending protruded portions provided on the inner periphery.

Furthermore, in a fourth aspect of the present invention, a heat shrinkable tube having a hollow tubular shape with an inner periphery includes protruded portions irregularly disposed on the inner periphery.

### Advantageous Effect of the Invention

The heat shrinkable tube according to the first aspect of the present invention having the hollow tubular shape with an inner periphery includes protruded portions extending in at least two directions intersecting with each other on the inner periphery. Therefore, the heat shrinkable tube according the first aspect can improve adhesive strength not only in the cross-sectionally circumferential direction of tubular resin bodies but also in the longitudinal direction of the tubular resin bodies when an outer tubular resin body is layered and joined on outer periphery of an inner tubular resin body formed using the heat shrinkable tube.

Further, the heat shrinkable tube according to the second aspect of the present invention in which the two directions in the first aspect of the present invention are a longitudinal direction of the hollow tubular shape and a circumferential direction straight to the longitudinal direction. Therefore, the heat shrinkable tube according the second aspect can further improve adhesive strength in the cross-sectionally circumferential direction of tubular resin bodies and adhesive strength in the longitudinal direction of the tubular resin bodies when an outer tubular resin body is layered and joined on the outer periphery of an inner tubular resin body formed using the heat shrinkable tube.

Moreover, the heat shrinkable tube according to the third aspect of the present invention having the hollow tubular shape with an inner periphery includes spirally-extending protruded portions provided on the inner periphery. Therefore, the heat shrinkable tube itself can easily be formed merely by winding element wires and then joining adjacent element wires. In addition, adhesive strength not only in the cross-sectionally circumferential direction of tubular resin bodies but also in the longitudinal direction of the tubular resin bodies can be improved when an outer tubular resin body is layered and joined on the outer periphery of an inner tubular resin body formed using the heat shrinkable tube.

Further, the heat shrinkable tube according to the fourth aspect of the present invention having the hollow tubular shape with an inner periphery includes protruded portions irregularly disposed on the inner periphery. Therefore, the heat shrinkable tube according to the fourth aspect can improve adhesive strength not only in the cross-sectionally circumferential direction of tubular resin bodies but also in the longitudinal direction of the tubular resin bodies when an outer tubular resin body is layered and joined on the outer periphery of an inner tubular resin body formed using the heat shrinkable tube.

### BRIEF DESCRIPTION OF THE DRAWINGS

Fig. 1 shows an overall view of a heat shrinkable tube according to a first embodiment of the present invention.
Fig. 2 shows a longitudinal sectional view of Fig. 1.
Fig. 3 shows a longitudinal sectional view of a second embodiment of the present invention, which corresponds to Fig. 2.
Fig. 4 shows a longitudinal sectional view of a third embodiment of the present invention, which corresponds to Fig. 2.
Fig. 5 shows a longitudinal sectional view of a fourth embodiment of the present invention, which corresponds to Fig. 2.
Fig. 6 shows a longitudinal sectional view of a fifth embodiment of the present invention, which corresponds to Fig. 2.
Fig. 7 shows an overall view of a heat shrinkable tube according to a sixth embodiment of the present invention.

### PREFERRED MODE FOR CARRYING OUT THE INVENTION

Below, the embodiments of the present invention will be described with reference to the figures.

### First embodiment

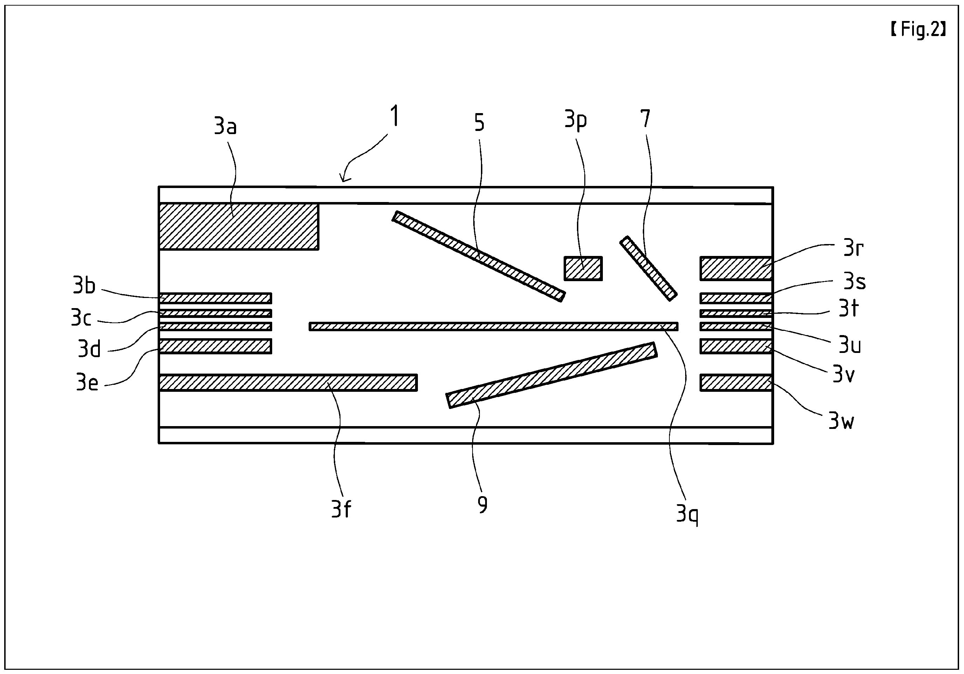

First, a heat shrinkable tube according to a first embodiment of the present invention will be described with reference to Figs. 1 and 2.

Fig. 1 shows an overall view of the heat shrinkable tube according to the first embodiment of the present invention. Fig. 2 shows a longitudinal sectional view of Fig. 1.

In Figs. 1 and 2, a heat shrinkable tube 1 has an overall hollow tubular shape with an inner periphery, and includes a plurality of longitudinal protruded portions 3a, 3b, 3c, 3d, 3e, 3f, 3g, 3h, 3j, 3k, 3m, 3n, 3p, 3q, 3r, 3s, 3t, 3u, 3v, and 3w extending in the longitudinal direction of the heat shrinkable tube 1 and inclined protruded portions 5, 7, and 9 extending in directions intersecting with the longitudinal direction of the heat shrinkable tube 1 on the inner periphery.

It is noted that the longitudinal protruded portions and the inclined protruded portions are shaded in Fig. 2 in order to facilitate understanding.

There is no particular limitation for a resin material for the heat shrinkable tube 1 as long as the material is heat shrinkable, but FEP (tetrafluoroethylene-hexafluoropropylene copolymer) is used in the present embodiment.

The heat shrinkable tube 1 according to the present invention has the hollow tubular shape with an inner periphery, and includes the plurality of longitudinal protruded portions 3a, 3b, 3c, 3d, 3e, 3f, 3g, 3h, 3j, 3k, 3m, 3n, 3p, 3q, 3r, 3s, 3t, 3u, 3v, and 3w extending in the longitudinal direction of the heat shrinkable tube 1 and the inclined protruded portions 5, 7, and 9 extending in directions intersecting with the longitudinal direction of the heat shrinkable tube 1 on the inner periphery. This configuration can improve adhesive strength not only in the cross-sectionally circumferential direction of tubular resin bodies but also in the longitudinal direction of the tubular resin bodies, leading to enhancement of joining strength between an inner tubular resin body and an outer tubular resin body when the inner tubular resin body (not shown, which is generally made of a material having a lower melting point than the heat shrinkable tube, such as nylon and urethane. The same applies hereinafter.) is inserted into the inside of the heat shrinkable tube 1, and then the heat shrinkable tube 1 is heated and contracted to form depressed portions on the outer periphery of the inner tubular resin body, the depressed portions corresponding to the plurality of longitudinal protruded portions 3a, 3b, 3c, 3d, 3e, 3f, 3g, 3h, 3j, 3k, 3m, 3n, 3p, 3q, 3r, 3s, 3t, 3u, 3v, and 3w and the inclined protruded portions 5, 7, and 9 extending in directions intersecting with the longitudinal direction of the heat shrinkable tube 1, and the outer tubular resin body is then layered and joined on the outer periphery of the inner tubular resin body.

It is noted that only the longitudinal protruded portions and the inclined protruded portions in one cross-sectional side are shown in Fig. 2, but an appropriate number of the longitudinal protruded portions and the inclined protruded portions are also formed in the other cross-sectional side.

Further, there is no particular limitation for the number of the longitudinal protruded portions and the inclined protruded portions. At least one longitudinal protruded portion and at least one inclined protruded portion formed on the inner periphery of the heat shrinkable tube would be able to enhance joining strength between the inner tubular resin body and the outer tubular resin body.

Further, it is sufficient that the inclined protruded portions may be inclined in one or more directions. The number of directions is not limited to 3 as in the present invention, but the inclined protruded portions may be inclined in three directions or more.

### Second embodiment

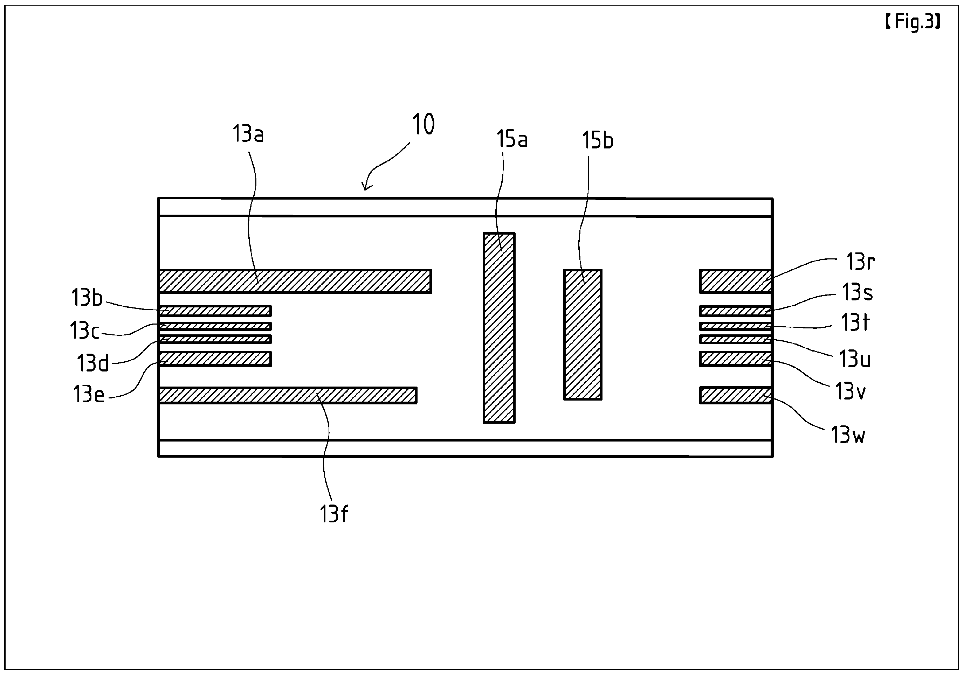

Next, a heat shrinkable tube according to a second embodiment of the present invention will be described with reference to Fig. 3. Fig. 3 shows a longitudinal sectional view of the second embodiment of the present invention, which corresponds to Fig. 2.

In Fig. 3, a heat shrinkable tube 10 has an overall hollow tubular shape with an inner periphery, and includes a plurality of longitudinal protruded portions 13a, 13b, 13c, 13d, 13e, 13f, 13r, 13s, 13t, 13u, 13v, and 13w extending in the longitudinal direction of the heat shrinkable tube 10 and orthogonal protruded portions 15a and 15b extending in a direction orthogonal to the longitudinal direction of the heat shrinkable tube 10 on the inner periphery.

It is noted that the longitudinal protruded portions and the orthogonal protruded portions are shaded in Fig. 3 in order to facilitate understanding.

There is no particular limitation for a resin material of the heat shrinkable tube 10 as long as the material is heat shrinkable, but FEP (tetrafluoroethylene-hexafluoropropylene copolymer) is used in the present embodiment.

The heat shrinkable tube 10 according to the present embodiment has the hollow tubular shape with an inner periphery, and includes the plurality of longitudinal protruded portions 13a, 13b, 13c, 13d, 13e, 13f, 13r, 13s, 13t, 13u, 13v, and 13w extending in the longitudinal direction of the heat shrinkable tube 10 and the orthogonal protruded portions 15a and 15b extending in a direction orthogonal to the longitudinal direction of the heat shrinkable tube 10 on the inner periphery. This configuration can further improve adhesive strength not only in the cross-sectionally circumferential direction of tubular resin bodies but also in the longitudinal direction of the tubular resin bodies, leading to enhancement of joining strength between an inner tubular resin body and an outer tubular resin body when the inner tubular resin body (not shown) is inserted into the inside of the heat shrinkable tube 10, and then the heat shrinkable tube 10 is heated and contracted to form depressed portions on the outer periphery of the inner tubular resin body, the depressed portions corresponding to the plurality of longitudinal protruded portions 13a, 13b, 13c, 13d, 13e, 13f, 13r, 13s, 13t, 13u, 13v, and 13w and the plurality of orthogonal protruded portions 15a and 15b, and the outer tubular resin body is then layered and joined on the outer periphery of the inner tubular resin body.

It is noted that only the longitudinal protruded portions and the orthogonal protruded portions in one cross-sectional side are shown in Fig. 3, but an appropriate number of the longitudinal protruded portions and the orthogonal protruded portions are also formed in the other cross-sectional side.

Further, there is no particular limitation for the number of the longitudinal protruded portions and orthogonal protruded portions. At least one longitudinal protruded portion and at least one orthogonal protruded portion formed on the inner periphery of the heat shrinkable tube would be able to enhance joining strength between the inner tubular resin body and the outer tubular resin body.

### Third embodiment

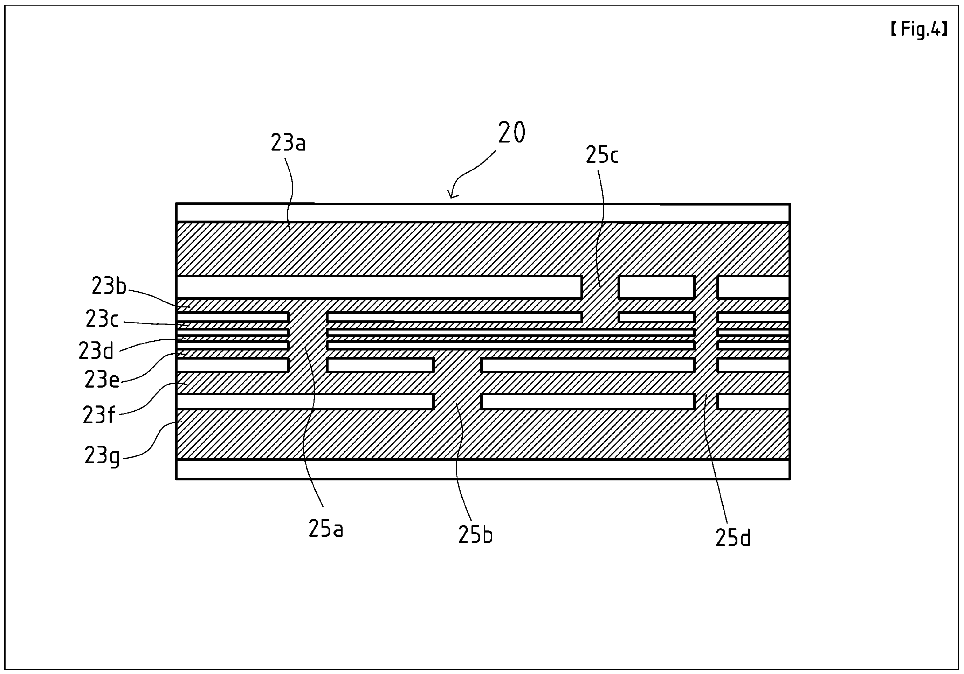

Next, a heat shrinkable tube according to a third embodiment of the present invention will be described with reference to Fig. 4. Fig. 4 shows a longitudinal sectional view of the third embodiment of the present invention, which corresponds to Fig. 2.

In Fig. 4, a heat shrinkable tube 20 has an overall hollow tubular shape with an inner periphery, and includes a plurality of longitudinal protruded portions 23a, 23b, 23c, 23d, 23e, 23f, and 23g extending in the longitudinal direction of the heat shrinkable tube 20 and orthogonal protruded portions 25a, 25b, 25c, and 25d extending in a direction orthogonal to the longitudinal direction of the heat shrinkable tube 20 on the inner periphery.

In the case of the protruded portions according to the present embodiment, the longitudinal protruded portions 23a, 23b, 23c, 23d, 23e, 23f, and 23g and the orthogonal protruded portions 25a, 25b, 25c, and 25d are not each independently formed on the inner periphery of the heat shrinkable tube 20 unlike the protruded portions of the heat shrinkable tube 1 and the heat shrinkable tube 10, but the longitudinal protruded portions and the orthogonal protruded portions are continuously formed as shown in Fig. 4.

According to the results from experiments performed by the present applicant, the heat shrinkable tube 20 according to the present embodiment was somewhat inferior in terms of a force for deforming an inner tubular resin body as compared with the heat shrinkable tube 1 according to the first embodiment and the heat shrinkable tube 10 according to the second embodiment.

However, it was able to be confirmed that not only adhesive strength in the cross-sectionally circumferential direction of tubular resin bodies but also adhesive strength in the longitudinal direction of the tubular resin bodies can be improved, leading to enhancement of joining strength between an inner tubular resin body and an outer tubular resin body.

It is noted that the longitudinal protruded portions and the orthogonal protruded portions are shaded in Fig. 4 in order to facilitate understanding.

There is no particular limitation for a resin material of the heat shrinkable tube 20 as long as the material is heat shrinkable, but FEP (tetrafluoroethylene-hexafluoropropylene copolymer) is used in the present embodiment.

The heat shrinkable tube 20 according to the present embodiment has the hollow tubular shape with an inner periphery, and includes the longitudinal protruded portions 23a, 23b, 23c, 23d, 23e, 23f, and 23g extending in the longitudinal direction of the heat shrinkable tube 1 and the orthogonal protruded portions 25a, 25b, 25c, and 25d extending in a direction orthogonal to the longitudinal direction of the heat shrinkable tube 1. This configuration can improve adhesive strength not only in the cross-sectionally circumferential direction of tubular resin bodies but also in the longitudinal direction of the tubular resin bodies, leading to enhancement of joining strength between an inner tubular resin body and an outer tubular resin body when the inner tubular resin body (not shown) is inserted into the inside of the heat shrinkable tube 20, and then the heat shrinkable tube 20 is heated and contracted to form depressed portions on the outer periphery of the inner tubular resin body, the depressed portions corresponding to the plurality of longitudinal protruded portions 23a, 23b, 23c, 23d, 23e, 23f, and 23g and the orthogonal protruded portions 25a, 25b, 25c, and 25d extending in a direction orthogonal to the longitudinal direction of the heat shrinkable tube 1, and the outer tubular resin body is then layered and joined on the outer periphery of the inner tubular resin body.

It is noted that only the longitudinal protruded portions and the orthogonal protruded portions in one cross-sectional side are shown in Fig. 4, but an appropriate number of the longitudinal protruded portions and the orthogonal protruded portions are also formed in the other cross-sectional side.

Further, there is no particular limitation for the number of the longitudinal protruded portions and the orthogonal protruded portions. At least one longitudinal protruded portion and at least one orthogonal protruded portion formed on the inner periphery of the heat shrinkable tube would be able to enhance joining strength between an inner tubular resin body and an outer tubular resin body.

### Fourth embodiment

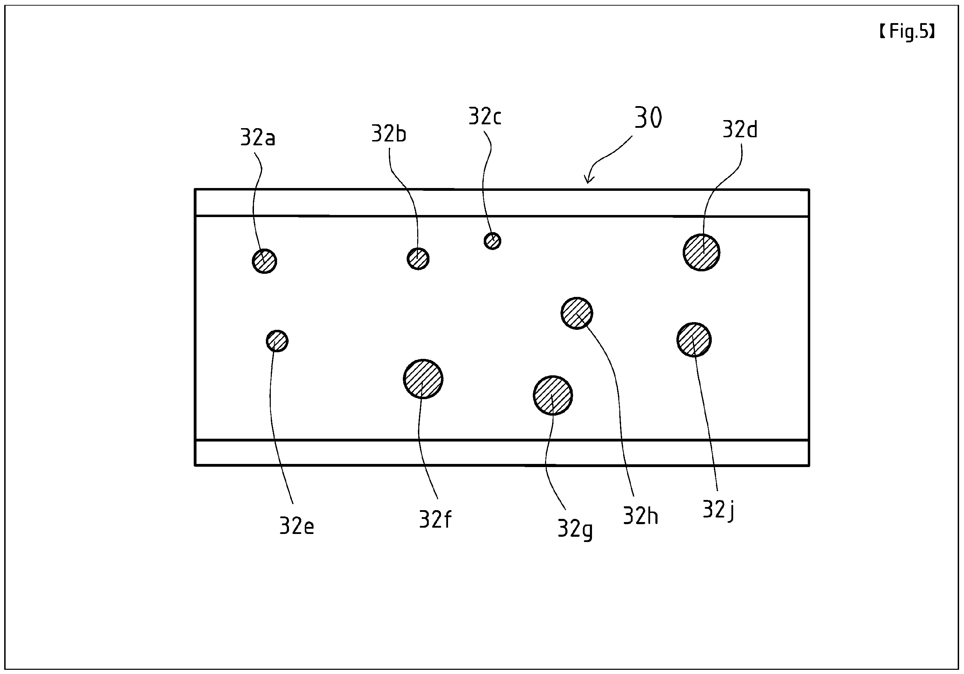

Next, a heat shrinkable tube according to a fourth embodiment of the present invention will be described with reference to Fig. 5. Fig. 5 shows a longitudinal sectional view of the fourth embodiment of the present invention, which corresponds to Fig. 2.

In Fig. 5, a heat shrinkable tube 30 has an overall hollow tubular shape with an inner periphery, and includes plurality of cylindrical protruded portions 32a, 32b, 32c, 32d, 32e, 32f, 32g, 32h, and 32j on the inner periphery, the cylindrical protruded portions being cylindrical.

It is noted that the cylindrical protruded portions are shaded in Fig. 5 in order to facilitate understanding.

There is no particular limitation of a resin material for the heat shrinkable tube 30 as long as the material is heat shrinkable, but FEP (tetrafluoroethylene-hexafluoropropylene copolymer) is used in the present embodiment.

The heat shrinkable tube 30 according to the present embodiment has the overall hollow tubular shape with an inner periphery, and includes the cylindrical protruded portions 32a, 32b, 32c, 32d, 32e, 32f, 32g, 32h, and 32j on the inner periphery, the cylindrical protruded portions being cylindrical. This configuration can further improve adhesive strength not only in the cross-sectionally circumferential direction of tubular resin bodies but also in the longitudinal direction of the tubular resin bodies, leading to enhancement of joining strength between an inner tubular resin body and an outer tubular resin body when the inner tubular resin body (not shown) is inserted into the inside of the heat shrinkable tube 30, and then the heat shrinkable tube 30 is heated and contracted to form depressed portions on the outer periphery of the inner tubular resin body, the depressed portions corresponding to the plurality of cylindrical protruded portions 32a, 32b, 32c, 32d, 32e, 32f, 32g, 32h, and 32j, and the outer tubular resin body is then layered and joined on the outer periphery of the inner tubular resin body.

It is noted that only the cylindrical protruded portions in one cross-sectional side disposed irregularly (in a scattered fashion) are shown in Fig. 5, but an appropriate number of the cylindrical protruded portions are also formed so as to be disposed irregularly (in a scattered fashion) on the other cross-sectional side.

Further, there is no particular limitation for the number of the cylindrical protruded portions. At least one cylindrical protruded portion formed on the inner periphery of the heat shrinkable tube would be able to enhance joining strength between an inner tubular resin body and an outer tubular resin body.

### Fifth embodiment

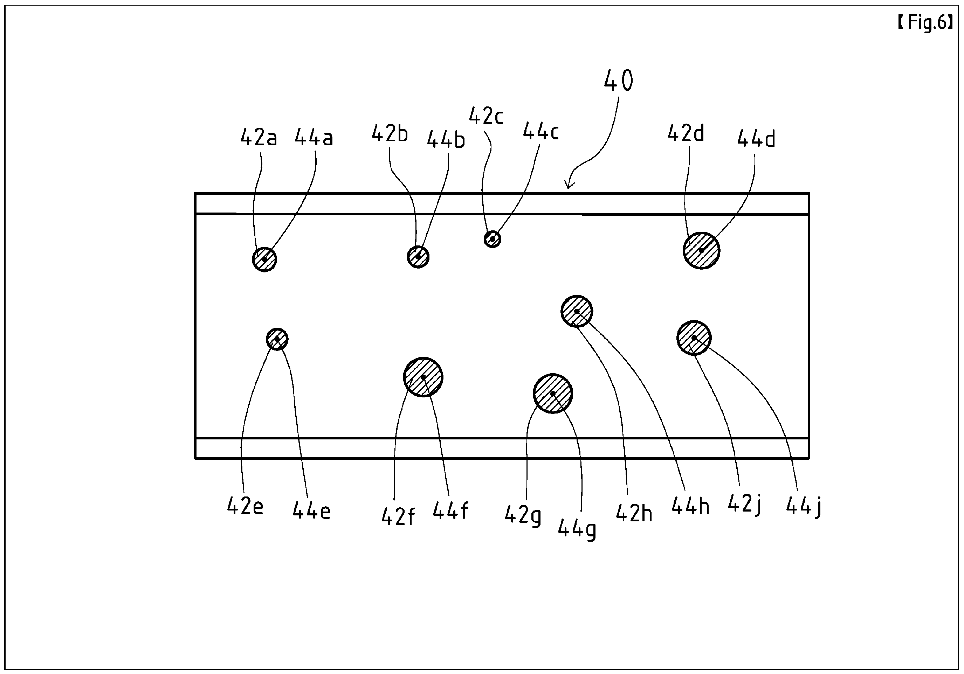

Next, a heat shrinkable tube according to a fifth embodiment of the present invention will be described with reference to Fig. 6. Fig. 6 shows a longitudinal sectional view of the fifth embodiment of the present invention, which corresponds to Fig.2.

In Fig. 6, a heat shrinkable tube 40 has an overall hollow tubular shape with an inner periphery, and includes a plurality of conical protruded portions 42a (an apex 44a), 42b (an apex 44b), 42c (an apex 44c), 42d (an apex 44d), 42e (an apex 44e), 42f (an apex 44f), 42g (an apex 44g), 42h (an apex 44h), and 42j (an apex 44j) on the inner periphery, the conical protruded portions being conical.

It is noted that the conical protruded portions are shaded in Fig. 6 in order to facilitate understanding.

There is no particular limitation for a resin material of the heat shrinkable tube 40 as long as the material is heat shrinkable, but FEP (tetrafluoroethylene-hexafluoropropylene copolymer) is used in the present embodiment.

The heat shrinkable tube 40 has the overall hollow tubular shape with an inner periphery, and includes the plurality of conical protruded portions 42a (the apex 44a), 42b (the apex 44b), 42c (the apex 44c), 42d (the apex 44d), 42e (the apex 44e), 42f (the apex 44f), 42g (the apex 44g), 42h (the apex 44h), and 42j (the apex 44j) on the inner periphery, the conical protruded portions being conical. This configuration can further improve adhesive strength not only in the cross-sectionally circumferential direction of tubular resin bodies but also in the longitudinal direction of the tubular resin bodies, leading to enhancement of joining strength between an inner tubular resin body and an outer tubular resin body when the inner tubular resin body (not shown) is inserted into the inside of the heat shrinkable tube 40, and then the heat shrinkable tube 40 is heated and contracted to form depressed portions on the outer periphery of the inner tubular resin body, the depressed portions corresponding to the plurality of conical protruded portions 42a (the apex 44a), 42b (the apex 44b), 42c (the apex 44c), 42d (the apex 44d), 42e (the apex 44e), 42f (the apex 44f), 42g (the apex 44g), 42h (the apex 44h), and 42j (the apex 44j), the plurality of cylindrical protruded portions 32a, 32b, 32c, 32d, 32e, 32f, 32g, 32h, and 32j, the conical protruded portions being conical.

It is noted that only the conical protruded portions in one cross-sectional side disposed in a scattered fashion are shown in Fig. 6, but an appropriate number of the conical protruded portions are also formed so as to be disposed in a scattered fashion on the other cross-sectional side.

Further, there is no particular limitation for the number of the conical protruded portions. At least one conical protruded portion formed on the inner periphery of the heat shrinkable tube would be able to enhance joining strength between an inner tubular resin body and an outer tubular resin body.

It is noted that protrusions and depressions, including the conical protruded portions according to the present embodiment, can be formed on the inner peripheral surface of a heat shrinkable tube by increasing or decreasing a withdrawal rate when performing extrusion molding.

### Sixth embodiment

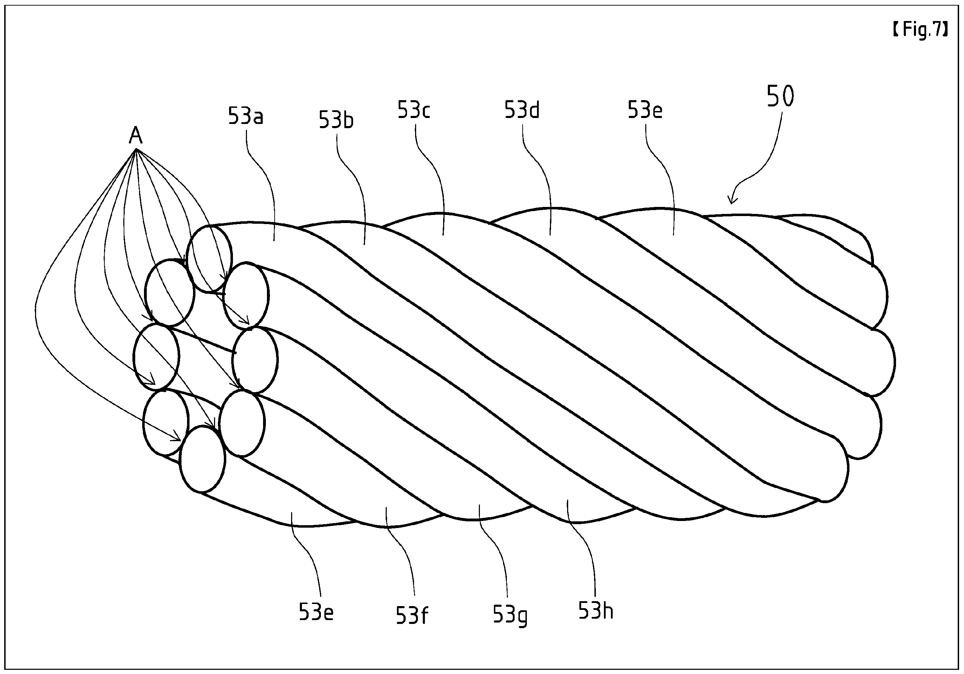

Next, a heat shrinkable tube according to a sixth embodiment of the present invention will be described with reference to Fig. 7. Fig. 7 shows an overall view of the heat shrinkable tube according to the sixth embodiment of the present invention.

In Fig. 7, a heat shrinkable tube 50 is formed by spirally winding 8 cold-rolled resin element wires (53a, 53b, 53c, 53d, 53e, 53f, 53g, and 53h) into a hollow tubular shape.

There is no particular limitation for a resin material of the heat shrinkable tube 50 as long as the material is heat shrinkable, but FEP (tetrafluoroethylene-hexafluoropropylene copolymer) is used in the present embodiment.

In the heat shrinkable tube 50, adjacent wires of the resin element wires are joined at their abutting portion A such that the entire of the heat shrinkable tube 50 will contract toward the cross-sectional center of a tubular portion.

This configuration can improve adhesive strength not only in the cross-sectionally circumferential direction of tubular resin bodies but also in the longitudinal direction of the tubular resin bodies, leading to enhancement of joining strength between an inner tubular resin body and an outer tubular resin body when the inner tubular resin body (not shown) is inserted into the inside of the heat shrinkable tube 50, and then the heat shrinkable tube 50 is heated and contracted to form spirally-arranged depressed portions on the outer periphery of the inner tubular resin body, the spirally-arranged depressed portions corresponding to the shape of the 8 resin element wires (53a, 53b, 53c, 53d, 53e, 53f, 53g, and 53h), and the outer tubular resin body is then layered and joined on the outer periphery of the inner tubular resin body.

The number of the resin element wire is 8 in the present embodiment, but there is no particular limitation for the number thereof. One or more is sufficient as long as the hollowness of a heat shrinkable tube can be maintained.

It is noted that in the heat shrinkable tube 50 according to the present embodiment, adjacent wires of the resin element wires are joined at their abutting portion A, but the abutting portion may not be joined if the shape of the heat shrinkable tube 50 can be maintained when subjected to heat contraction.

### DESCRIPTION OF THE REFERENCE NUMERALS

1, 10, 20, 30, 40, 50 Heat shrinkable tube
3a, 3b, 3c, 3d, 3e, 3f, 3g, 3h, 3j, 3k, 3m, 3n, 3p, 3q, 3r, 3s, 3t, 3u, 3v, 3w, 13a, 13b, 13c, 13d, 13e, 13f, 13r, 13s, 13t, 13u, 13v, 13w, 23a, 23b, 23c, 23d, 23e, 23f, 23g Longitudinal protruded portion
5, 7, 9 Inclined protruded portion
15a, 15b, 25a, 25b, 25c, 25d Orthogonal protruded portion
32a, 32b, 32c, 32d, 32e, 32f, 32g, 32h, 32j Cylindrical protruded portion
42a, 42b, 42c, 42d, 42e, 42f, 42g, 42h, 42j Conical protruded portion
44a, 44b, 44c, 44d, 44e, 44f, 44g, 44h, 44j Apex
53a, 53b, 53c, 53d, 53e, 53f, 53g, 53h Resin element wire

## Claims

1. A heat shrinkable tube having a hollow tubular shape with an inner periphery, comprising protruded portions extending in at least two directions intersecting with each other provided on the inner periphery.

2. The heat shrinkable tube according to claim 1, wherein the two directions are a longitudinal direction of the hollow tubular shape and a circumferential direction straight to the longitudinal direction.

3. A heat shrinkable tube having a hollow tubular shape with an inner periphery, comprising spirally-extending protruded portions provided on the inner periphery.

4. A heat shrinkable tube having a hollow tubular shape with an inner periphery, comprising protruded portions irregularly disposed on the inner periphery.
